# EUROPEAN PATENT APPLICATION

(11) **EP 4 016 459 A1**
(43) Date of publication of application: **22.06.2022**
(21) Application number: 21178657.9
(22) Date of filing: 09.06.2021
(51) Int. Cl.: G06T 7/80

(54) **SYSTEMS AND METHODS FOR CALIBRATING SENSORS OF AUTONOMOUS VEHICLES**

(30) Priority: 17.12.2020 US 202017125383
(71) Applicant: 6 River Systems, LLC, Waltham, MA 02452 (US)
(72) Inventor: BARABAS, James, Ottawa (CA); GUPTA, Arpit, Ottawa (CA)
(74) Representative: Murgitroyd & Company

(57) **Abstract**

Disclosed herein are computing systems and computer-implemented methods for autonomous vehicle operation. The computing system can include a processor configured to determine a transformation function based on a current position of at least one sensor of a first autonomous vehicle relative to a body of the first autonomous vehicle such that, when the transformation function is applied to images captured by the sensor, the images are adjusted to correspond to an intended position of the sensor relative to the body of the first autonomous vehicle.

## Description

### TECHNICAL FIELD

The following disclosure relates to systems and methods for calibrating sensors of autonomous vehicles and, more specifically, systems and methods for calibrating cameras of autonomous vehicles.

### BACKGROUND

Autonomous vehicles can be configured to navigate open spaces (e.g., in air, over land, under water, etc.). For example, autonomous vehicles can be configured to navigate within an area that includes obstacles or humans. Such an area may be a warehouse, a retail store, a hospital, an office, etc. To successfully navigate such areas, autonomous vehicles can rely on one or more sensors.

### SUMMARY

Described herein are exemplary systems and methods for calibrating sensors of autonomous vehicles.

In one aspect, the disclosure features a computing system for autonomous vehicle operation. The computing system can include a processor configured to determine a transformation function based on a current position of at least one sensor of a first autonomous vehicle relative to a body of the first autonomous vehicle such that, when the transformation function is applied to images captured by the sensor, the images are adjusted to correspond to an intended position of the sensor relative to the body of the first autonomous vehicle.

Various embodiments of the computing system can include one or more of the following features.

The current position of the sensor can include an angle of the sensor relative to the body of the first autonomous vehicle. The system can include a communication device communicably coupled to the processor, the communication device configured to: transmit, to a controller of the first autonomous vehicle, a navigation signal for navigating the first autonomous vehicle to a calibration location; and receive, from the sensor of the first autonomous vehicle, at least one calibration image of the calibration location, the calibration image indicating a calibration position of the sensor of the first autonomous vehicle. The communication device can be further configured to: transmit, to a controller of a second autonomous vehicle, a navigation signal for navigating the second autonomous vehicle to the calibration location; and receive, from at least one sensor of the second autonomous vehicle, an image of the calibration location, and wherein the processor is further configured to evaluate the image to determine the current position of the sensor of the second autonomous vehicle relative to the body of the second autonomous vehicle.

In evaluating the image, the processor can be configured to compare the calibration image to the image received from the sensor of the second autonomous vehicle. The first autonomous vehicle can be the same as the second autonomous vehicle. The calibration location can be a surface over which the first autonomous vehicle navigates. The sensor can be a camera, a depth sensor, or a LiDAR sensor. The processor can be further configured to apply the transformation function to the images captured by the sensor.

In another aspect, the disclosure features a computer-implemented method for automatic sensor position calibration in autonomous vehicles. The method can include determining, by a processor, a transformation function based on a current position of at least one sensor of a first autonomous vehicle relative to a body of the first autonomous vehicle such that, when the transformation function is applied to images captured by the sensor, the images are adjusted to correspond to an intended position of the sensor relative to the body of the first autonomous vehicle.

Various embodiments of the computer-implemented method can include one or more of the following features.

The current position of the sensor can include an angle of the sensor relative to the body of the first autonomous vehicle. The method can include transmitting, to a controller of the first autonomous vehicle by a communication device communicably coupled to the processor, a navigation signal for navigating the first autonomous vehicle to a calibration location; and receiving, by the communication device from the sensor of the first autonomous vehicle, at least one calibration image of a calibration location, the calibration image indicating a calibration position of the sensor of the first autonomous vehicle. The method can include detecting, by the processor and based on the calibration image, at least one surface of the calibration location; and determining, by the processor and based on the detected surface, a calibration angle of the sensor of the first autonomous vehicle relative to at least one axis of the detected surface.

The method can include storing, by a memory, the calibration image, wherein the memory is at least one of: (i) a memory of the first autonomous vehicle; or (ii) a memory of a remote computing system communicably coupled to the first autonomous vehicle. The method can include transmitting, by the communication device to a controller of a second autonomous vehicle, a navigation signal for navigating the second autonomous vehicle to the calibration location; receiving, by the communication device from at least one sensor of the second autonomous vehicle, an image of the calibration location; and evaluating, by the processor, the image to determine the current position of the sensor of the second autonomous vehicle relative to the body of the second autonomous vehicle.

The method can include prior to transmitting the navigation signal for navigating the second autonomous vehicle: receiving, by the communication device, a signal indicative of at least one navigation event relating to the second autonomous vehicle; and determining, by the processor, whether the navigation event is within a set of defined events associated with traversal of a path by the second autonomous vehicle.

The at least one navigation event can include at least one of: (a) a speed of the second autonomous vehicle; (b) an efficiency in collecting or shelving items by the second autonomous vehicle; or (c) a collision between the second autonomous vehicle and an object. The evaluating can include comparing, by the processor, the calibration image to the image received from the sensor of the second autonomous vehicle. The first autonomous vehicle can be the same as the second autonomous vehicle. The calibration location can be a surface over which the first autonomous vehicle navigates. The sensor can be a camera, a depth sensor, or a LiDAR sensor.

The method can include applying, by the processor, the transformation function to the images captured by the sensor. Applying the transformation function to the images captured by the sensor can occur in real-time or near real-time with navigation of the first autonomous vehicle. The method can include receiving, by a communication device communicably coupled to the processor, a signal indicative of at least one of: (a) a speed of the first autonomous vehicle being within a desired speed range; (b) an efficiency in collecting or shelving items by the first autonomous vehicle being within a desired efficiency range; or (c) a lack of a collision between the first autonomous vehicle and an object.

In another aspect, the disclosure features a non-transitory computer-readable medium having instructions stored thereon that, when executed by one or more computer processors, cause the computer processors to perform operations can include determining a transformation function based on a current position of at least one sensor of an autonomous vehicle relative to a body of the autonomous vehicle such that, when the transformation function is applied to images captured by the sensor, the images are adjusted to correspond to an intended position of the sensor relative to the body of the autonomous vehicle.

Accordingly there is provided a method, a computing system, and a computer program as detailed in the claims that follow.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the systems and methods described herein. In the following description, various embodiments are described with reference to the following drawings.
Fig. 1A is a model of an embodiment of an autonomous vehicle configured to execute tasks within a warehouse-type environment.
Fig. 1B is a model of another embodiment of an autonomous vehicle configured to execute tasks within a warehouse-type environment.
Fig. 2 is a diagram of an embodiment of a system for calibrating sensors of autonomous vehicles.
Fig. 3 is a diagram of exemplary sensors depicted relative to the body of an autonomous vehicle.
Fig. 4 is a set of flowcharts of exemplary methods for calibrating sensors in autonomous vehicles.
Fig. 5 is a diagram of an exemplary calibration location for sensor calibration.
Fig. 6 is a block diagram of an exemplary workflow for applying a transformation function to one or more stages of sensor data generation.
Fig. 7 is a block diagram of an embodiment of a computer system used in implementing the systems and methods described herein.

### DETAILED DESCRIPTION

Autonomous vehicles depend on accurate and/or precise camera operation to safely navigate a warehouse or retail setting. In some cases, the view angle of one or more cameras on an autonomous vehicle can shift in situ or over time, for example, due to changes in weight placed on the vehicle, loosening of mechanical fixtures, etc.

In various embodiments, one or more autonomous vehicles can be routed from one location in a warehouse to another for picking and/or stocking. To reach a destination location, vehicles may be configured to travel routes through aisles that are prescribed or determined on-the-fly. As described further below, vehicles may have predetermined speeds and/or expected operational efficiency which may be hampered by mis-calibrated sensors.

The technology described herein may be employed in mobile carts of the type described in, for example, U.S. Patent No. 9,834,380, issued December 5, 2017 and titled "Warehouse Automation Systems and Methods," the entirety of which is incorporated herein by reference and described in part below.

### Exemplary Application to Autonomous Warehouse Carts

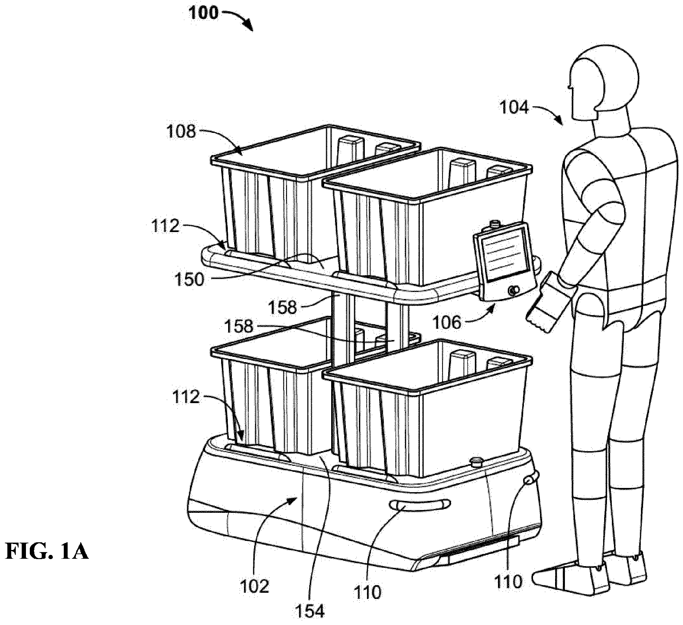

Fig. 1A depicts an enhanced cart system 100 including an enhanced cart 102 (e.g., an autonomous vehicle). As illustrated, one or more enhanced carts, often referred to in the industry as picking carts, can work alongside one or more warehouse workers 104 (also referred to as associates) to move inventory items around a warehouse. The enhanced carts 102 are intended to assist in most warehouse tasks, such as picking, re-stocking, moving, sorting, counting, or verifying items (e.g., products). These carts 102 can display information to the associate 104 through the use of a user interface (e.g., screen) 106 and/or onboard visual and/or audible indicators that improve the performance of the associates 104. The cart 102 can be propelled by a motor (e.g., an electric motor) that is coupled to a power source (e.g., a battery, a supercapacitor, etc.), such that the cart 102 moves autonomously and does not require being pushed or pulled by a human or other force. The cart 102 may travel to a charging area to charge its battery or batteries.

Referring still to Fig. 1A, the enhanced carts 102 may be configured to carry one or many similar or distinct storage containers 108, often in the form of totes or boxes, that can be used to hold one or more different products. These storage containers 108 may be removable from the enhanced cart 102. In some cases, each container 108 can be used as a separate picking location (i.e., one container 108 is a single order). In other cases, the containers 108 can be used for batch picking (i.e., each container 108 can contain multiple complete or partial orders). Each container 108 may be assigned to one or many different stations for post-pick sortation and processing. In one embodiment, one or more of the containers 108 are dedicated to batch picking of multiple types of products and another one or more containers 108 are dedicated to picking multiple quantities of a single product (e.g., for orders that only have one item). This singleton picking allows the warehouse to skip secondary sortation and deliver products directly to a packaging station. In another embodiment, one or more of the containers 108 are assigned to order picking (e.g., for potentially time sensitive orders) and one or more of the containers 108 are assigned to batch picking (e.g., for lower cost or less time sensitive orders). In yet another embodiment, one or more of the containers 108 carry product that will be used to re-stock product into storage locations. Another option is for the enhanced cart 102 to move product and/or shipments throughout the warehouse as needed between different stations, such as packing and shipping stations. In yet another implementation, one or more of the containers 108 is left empty to assist in counting product into and then back out of the container 108 as part of a cycle count task regularly carried out in warehouses for inventory management. The tasks may be completed in a mode dedicated to one task type or interleaved across different task types. For example, an associate 104 may be picking products into container "one" on the enhanced cart 102 and then be told to grab products from container "two" on the enhanced cart 102 and put them away in the same aisle.

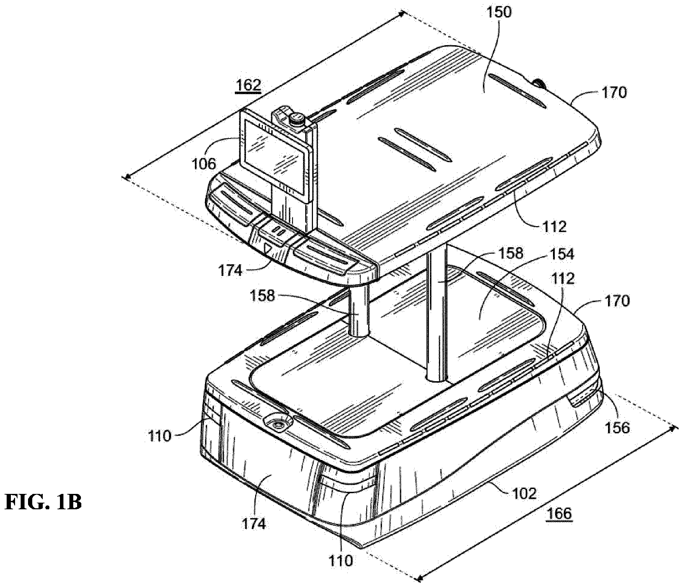

Fig. 1B is an alternative embodiment of the enhanced cart 102, and is shown (for ease of understanding) without the storage containers 108 being present. As before, the enhanced cart 102 includes the screen 106 and lighting indicators 110, 112. In operation, the storage containers 108 may be present on the enhanced cart 102 depicted in Fig. IB. With reference to both Figs. 1A and 1B, the enhanced cart 102 may include first and second platforms 150, 154 for supporting a plurality of containers 108 capable of receiving products. At least one support 158 may support the first platform 150 above the second platform 154. The at least one support 158 may be substantially centrally-located along respective lengths 162, 166 of the first and second platforms 150, 154 between front and back ends 170, 174 thereof and may support the first and second platforms 150, 154 at locations disposed within interior portions of the first and second platforms 150, 154. As illustrated in Fig. 1B, the front end 170 of the cart 102 may define a cutout 156. There may be one or more sensors (e.g., light detecting and ranging (LiDAR) sensors) housed within the cutout 156. The cutout 156 permits the sensor(s) to view and detect objects in front of and to the side of (e.g., more than 180° around) the cart 102.

The following discussion focuses on the use of autonomous vehicles, such as the enhanced cart 102, in a warehouse environment, for example, in guiding workers around the floor of a warehouse and carrying inventory or customer orders for shipping. However, autonomous vehicles of any type can be used in many different settings and for various purposes, including but not limited to: driving passengers on roadways, delivering food and medicine in hospitals, carrying cargo in ports, cleaning up waste, etc. This disclosure, including but not limited to the technology, systems, and methods described herein, is equally applicable to any such type of autonomous vehicle.

### Computing Systems for Autonomous Vehicle Operation

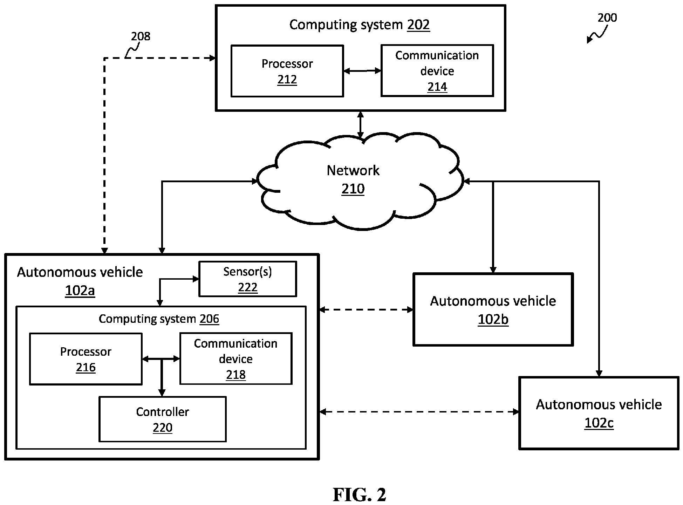

Fig. 2 illustrates a system 200 configured for sensor calibration in autonomous vehicles. The system 200 may include a remote computing system 202 configured to be coupled directly or indirectly to one or more autonomous vehicles 102a, 102b, 102c (collectively referred to as 102). For instance, the remote computing system 202 may communicate directly with the computing system 206 of an autonomous vehicle 102 (e.g., via communication channel 208). Additionally or alternatively, the remote computing system 202 can communicate with one or more autonomous vehicles 102 via a network device of network 210. In some embodiments, the remote computing system 202 may communicate with a first autonomous vehicle (e.g., vehicle 102a) via a second autonomous vehicle (e.g., vehicle 102b).

The exemplary remote computing system 202 may include one or more processors 212 coupled to a communication device 214 configured to receive and transmit messages and/or instructions (e.g., to and from autonomous vehicle(s) 102). The exemplary vehicle computing system 206 may include a processor 216 coupled to a communication device 218 and a controller 220. The vehicle communication device 218 may be coupled to the remote communication device 214. The vehicle processor 216 may be configured to process signals from the remote communication device 214 and/or vehicle communication device 218. The controller 220 may be configured to send control signals to a navigation system and/or other components of the vehicle 102, as described further herein. The vehicle 102 can include one or more sensors 222 configured to capture sensor data (e.g., images, video, audio, depth information, etc.) and transmit the sensor data to the remote computing system 202 and/or to the vehicle computing system 206. As discussed herein and unless otherwise specified, the term "computing system" may refer to the remote computing system 202 and/or the vehicle computing system 206.

The computing system(s) may receive and/or obtain information about one or more tasks, e.g., from another computing system or via a network. In some cases, a task may be customer order, including the list of items, the priority of the order relative to other orders, the target shipping date, whether the order can be shipped incomplete (without all of the ordered items) and/or in multiple shipments, etc. In some cases, a task may be inventory-related, e.g., restocking, organizing, counting, moving, etc. A processor (e.g., of system 202 and/or of system 206) may process the task to determine an optimal path for one or more autonomous vehicles 102 to carry out the task (e.g., collect items in a "picklist" for the order or moving items). For example, a task may be assigned to a single vehicle or to two or more vehicles 102.

The determined path may be transmitted to the controller 220 of the vehicle 102. The controller 220 may navigate the vehicle 102 in an optimized sequence of stops (also referred to as a trip) within the warehouse to collect or move items. At a given stop, a worker near the vehicle 102 may physically place the item into a container 108 for the vehicle 102 to carry. Alternatively or additionally, the autonomous vehicle 102 may include an apparatus (e.g., a robotic arm) configured to collect items into a container 108.

### Vehicle Sensors

In a warehouse setting (or in a retail store, a grocery store, a hospital, etc.), autonomous vehicles can navigate within aisles or spaces of the warehouse according to predetermined or variable paths. Additionally, autonomous vehicles may navigate in coordination with or around other autonomous vehicles and/or human workers. To do so safely and efficiently, the autonomous vehicles rely on one or more sensors 222 configured to capture images, depth information, and/or measurements. Such sensors 222 can include cameras, depth sensors, LiDAR sensors, acceleration sensors (also referred to as an accelerometer), gyroscopes, etc. In some embodiments, a first sensor may be coupled to a second sensor. For example, an accelerometer may be coupled to or configured as a part of a camera or depth sensor to determine the position of the camera or depth sensor relative to the body of the vehicle 102. In some embodiments, two or more accelerometers may be coupled to another sensor (e.g., a camera or depth sensor).

A sensor may be positioned in or on the vehicle 102 such that its field of view (FOV) has an angle relative to the body of the vehicle 102. For instance, a camera may have six (6) degrees of freedom, including three (3) degrees of position offset (also referred to as translation) and three (3) degrees of rotation, relative the vehicle body.

As discussed above, autonomous vehicles 102 can be tasked with collecting items, moving items, shelving items, counting items, sorting items, etc. within a warehouse. The weight and/or position of the items on a vehicle 102 may affect the use of the sensor 222 for proper navigation and/or shift the sensor's FOV. For example, a load placed near the front of the vehicle 102 would cause the sensors 222 near the vehicle front to be displaced down (e.g., translated down or rotated down). For example, in a particular environment, camera angles have been observed to be displaced by up to 5 degrees. In other cases, camera angles may be displaced by up to 7 degrees, up to 10 degrees, or more. In some cases, the mounting of the sensor on the vehicle 102 may become loose (e.g., due to loosened connectors). These activities may cause a persistent shift (e.g., over extended amounts of time) from the sensor FOV's intended position. For example, it could be that the frame of an autonomous vehicle becomes warped due to loading over time. In other cases, the sensor FOV may be temporarily shifted (e.g., because of a load on the vehicle 102). The shifted position (e.g., translated, rotated, etc. from its intended position) of the sensor 222 may be referred to herein as a "displaced" position. In a displaced position, the sensor 222 may provide incorrect sensor data to a processor, therefore impairing the proper, safe, and/or efficient navigation of the vehicle 102.

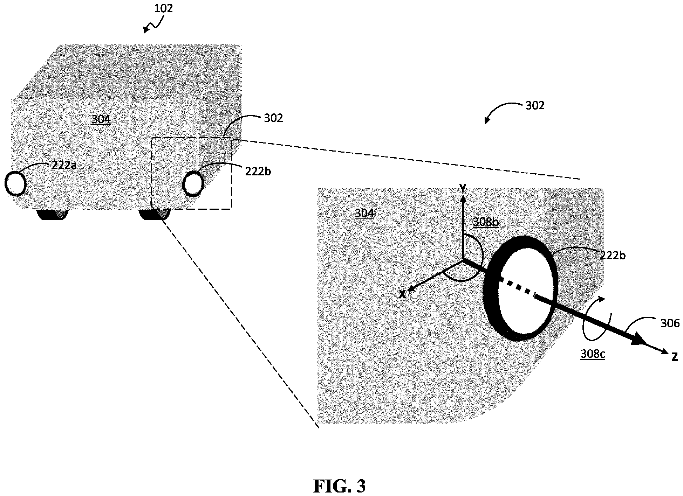

Fig. 3 illustrates an exemplary vehicle 102 having a first sensor 222a and a second sensor 222b (collectively referred to as sensor(s) 222). Referring to zoomed-in cutout 302, each sensor 222a, 222b is generally oriented such that the sensor FOV is outward from the body 304 of the vehicle 102. In some embodiments, sensor(s) 222 may have other configurations relative to the vehicle body 304 (e.g., with fields of view pointing up, down, perpendicular to a side of the body 304, etc.). The sensor FOV may be characterized by an axis 306 central to the FOV. In a stationary sensor (e.g., fixed relative to the vehicle body 304), the central axis 306 is at an angle to the vehicle body 304. For instance, in an intended position, axis 306 can be fixed at a first angle 308a and/or a second angle 308b to a point on the surface of the body 304. In an intended position, the sensor FOV may have a fixed rotation about the axis 306 with an angle 308c. However, in a displaced position, the axis 306 may be rotated according to angle 308a (referred to as yaw), angle 308b (referred to as pitch), and/or angle 308c (referred to as roll). Additionally or alternatively, in a displaced position, the sensor FOV may be translated relative to the body 304. For instance, axis 306 may be translated along the X axis (referred to as side-to-side translation), Y axis (referred to as up-down translation), and/or Z axis (referred to as forward-back translation).

When a sensor 222 becomes displaced, the vehicle 102 operation may suffer. In particular, because the sensor data are used to determine navigation for the vehicle 102, faulty or erroneous sensor data can cause the vehicle 102 to slow down, stop, or collide with objects. For example, the vehicle 102 may slow down or stop if an independent safety monitor prevents the vehicle 102 from navigating based on erroneous sensor data.

### Systems and Methods for Sensor Calibration

An automated system can be configured to adjust or calibrate the sensor(s) to account for translational and/or rotational shifting during operation and/or over time. In various embodiments, sensor data can be calibrated via data processing and/or sensor(s) can be calibrated by mechanical adjustment.

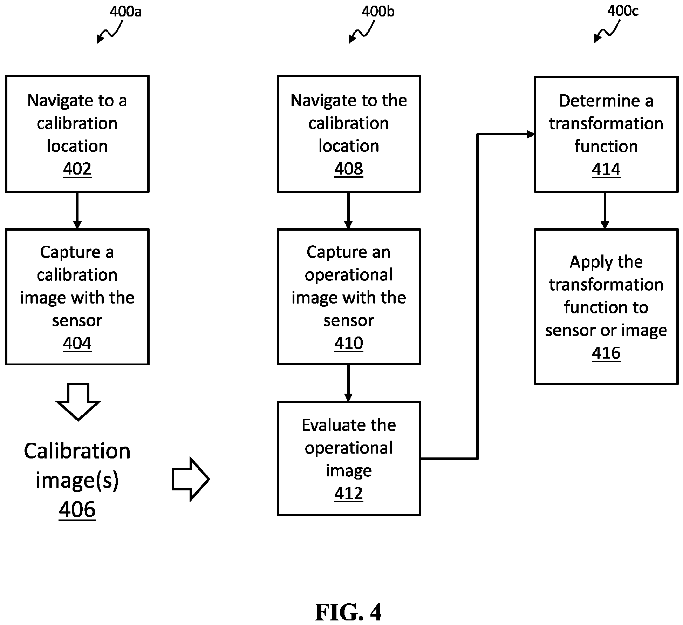

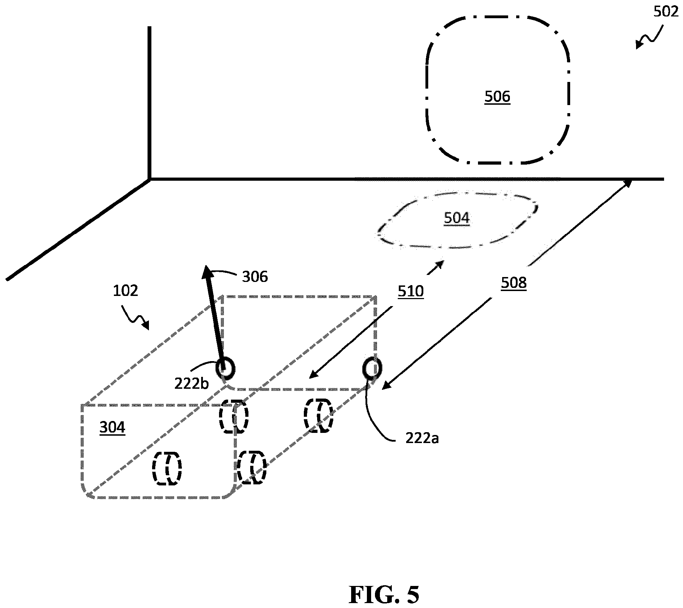

Fig. 4 includes flowcharts of exemplary sub-methods 400a, 400b, 400c (collectively referred to as method 400) for calibrating sensors in autonomous vehicles. Fig. 5 illustrates an exemplary calibration location for sensor calibration. For the sake of clarity and conciseness, Figs. 4-5 are discussed together herein.

In step 402, an autonomous vehicle 102 can navigate to a calibration location 502. This vehicle may function as a control in that it may be a properly functioning vehicle. For instance, the control vehicle may be a vehicle with newly-calibrated sensors or a highly efficient vehicle. A calibration location 502 can be a particular location within a warehouse, retail, or other setting that stays the same or similar over time. It can be beneficial to use calibration locations for sensor calibration because other locations may have varying features over time. For example, the types and positions of shelved products in aisles of a warehouse or retail store may change with time. Therefore, the calibration location 502 may be selected such that the surrounding objects are not likely to change frequently. In an example warehouse environment, such locations can include permanent shelving, a charging station, a management control center, etc.

In some embodiments, a calibration location 502 can be selected by the computing system based on evaluating the characteristics of various images collected throughout the warehouse (e.g., during normal operation of the autonomous vehicles). For example, a calibration location may be selected based on the low complexity and/or low variance of features in the corresponding image. In some embodiments, the processor 216 of a vehicle 102 may be configured to select a calibration location opportunistically. For example, the vehicle 102 may navigate past a surface that is suitable for a calibration location and select that location to be used as a calibration location as described herein. In some embodiments, a calibration location 502 may be a location that the vehicle 102 interacts with on a regular basis (e.g., charging station). For example, a surface (e.g., floor, wall, sign, etc.) proximate the charging station may be selected as a calibration location as vehicles regularly (e.g., every half a day, every day, every three days, etc.) navigate to the charging station, giving a vehicle 102 ample access to calibrate its sensors 222. In some embodiments, a processor may receive signals indicative of navigation paths of a vehicle 102 to select a calibration location 502 for that vehicle 102. In some cases, a calibration location 502 may include a target or visual marker. In some cases, there may be multiple calibration locations (e.g., for the same or different sensor types). In some embodiments, a calibration location can have low complexity or a low number of surfaces or dimensions in its surroundings. For example, a calibration location can be a location where there is a clear view (e.g., uninterrupted horizon, free of objects, etc.) of a floor 504, a wall 506, etc.

In step 404, the sensor 222 of the control vehicle can capture one or more calibration images at the calibration location 502. The calibration image(s) can be captured at one or more distances and/or approach angles from the calibration location 502. The calibration image(s) can indicate one or more calibration angles for axis 306. In some embodiments, the calibration angle(s) can be used to correct sensor data from displaced sensor 222 such that the corrected sensor data matches (or nearly matches) sensor data that would be generated by a sensor 222 in its intended position.

In some embodiments, the calibration image(s) can be processed to extract the transformation. For example, a calibration transformation can include a specific pitch, roll, and/or yaw angle the axis 306 should have for the vehicle 102 to navigate properly. In another example, the calibration transformation can include a translation (e.g., in the X, Y, and/or Z axes) for the axis 306. The calibration image(s) can be stored in (and accessed from) a memory of a computing system (e.g., system 202 or system 206).

In step 408, the same or another autonomous vehicle 102 may be navigated (e.g., via the vehicle's controller 220) at a later time to the same calibration location 502. The vehicle 102 may be navigated to the calibration location 502 to determine whether its sensor(s) 222 may benefit from calibration or adjustment and/or for another reason (e.g., to charge at a charging station, to offload items at a shipping area, etc.). For example, if the vehicle 102 is navigating to a charging station for charging and a calibration location is proximate the charging station, the vehicle may opportunistically calibrate at the calibration location when the vehicle goes to charge.

In some embodiments, a computing system (e.g., a remote computing system 202 and/or a vehicle computing system 206) may receive a signal that indicates a deviation from normal operation by the vehicle 102. A deviation may be a lower speed than desired, a lower efficiency than desired in stocking or picking items, and/or a collision between the vehicle and an object (e.g., a rack for inventory, debris, a human, etc.). In some embodiments, a deviation may be human intervention in vehicle operation (e.g., a worker interacting with the user interface 106 to manually navigate the vehicle 102). A vehicle computing system 206 or the remote computing system 202 may determine whether a deviation has occurred, e.g., based on received vehicle speed data, data related to inventory movement (e.g., stocking and/or picking items), collision data, or other warehouse data.

The computing system may send a signal to the vehicle 102 to navigate to a calibration location 502 within a particular time of detecting the deviation (e.g., immediately, within minutes, within an hour, after completing a current task, finishing a task list, etc.). In some embodiments, the processor 216 of the vehicle 102a may detect the deviation and send navigation signals to controller 220 to navigate the vehicle to calibration location 502. For example, navigating to the calibration location 502 may coincide with the vehicle's planned path (e.g., to a charging station or past a calibration location 502). In some embodiments, a calibration location 502 may be selected based on the vehicle's current position, the type of sensor that is displaced, the type of vehicle, etc. A computing system may select a calibration location 502 that is further away for the vehicle 102 as compared to a closer location but that is better for the particular vehicle or sensor type. The more distanced calibration location 502 may be one with a greater number of or more recent calibration images, or one with greater agreement between calibration images (e.g., with respect to one or more calibration angles).

In step 410, the sensor(s) 222 of the vehicle can capture one or more images (referred to as "operational images") for evaluation. Note that the vehicle 102 may be directed to take an image of the calibration location 502 in the same or similar manner as the control vehicle. In particular, the vehicle may be directed to the same position relative to the calibration location 502. For example, the vehicle 102 may be navigated to a particular distance 508 (e.g., at 1 m, at 5 m, at 10 m, etc.) from a calibration wall 506 or a particular distance from the calibration floor area 504.

In step 412, a processor can evaluate the operational image relative to the calibration image. In some embodiments, the calibration angle(s) can be compared to the angle(s) in the operational images. The translation amount and/or degree of rotation between the intended position and the displaced position of the sensor 222 may be ascertained from the comparison. In some cases, the operational image may be compared to a more recent or more similar calibration image (e.g., by weighting such images more as compared to older or less similar calibration images). The processor can determine the difference in translation and/or rotation based on the comparison. In some embodiments, the calibration image may have a first data set including a first translation and a first rotation. The operational image may have a second data set including a second set including a second translation and a second rotation. The first data set can be compared to the second data set. The processor can determine the displacement between the first data set and the second data set. The displacement may be linear or non-linear (e.g., along an arc).

In some embodiments, a calibration angle may be so small that the processor may ignore calibrating the sensor 222 or sensor data. In some embodiments, the processor can compare the calibration angle to a predetermined threshold to determine whether calibration is needed. For example, the calibration angle may be within a predetermined number of angular units (e.g., degrees, radian, gradian, etc.) for rotation with respect to a predetermined threshold and/or a predetermined number of distance units (e.g., in metric or Imperial units) for translation with respect to a predetermined threshold. In some embodiments, the calibration angle may be within a percentage of the predetermined threshold. For example, a rotation of the calibration angle may be within 1%, 2%, 3%, or 5% of the rotation of the predetermined threshold. In another example, the translation of the calibration angle may be within 1%, 2%, 3%, or 5% of the translation of the predetermined threshold.

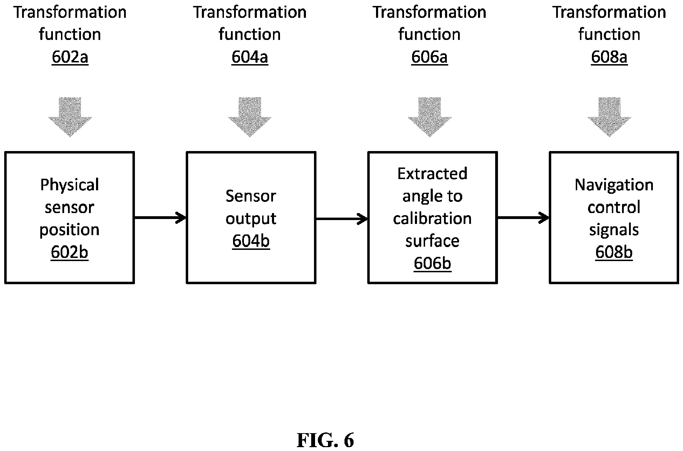

In step 414, the processor can determine a transformation function between a calibration parameter and an operational parameter of the sensor. For example, the parameter may be the position, angle, brightness, distortion, phase shift, etc. of a sensor signal or the sensor itself. In step 416, the processor can apply the transformation function to one or more stages of sensor data generation and/or sensor data processing. Referring to Fig. 6, in some embodiments, the processor may apply a transformation function 602a to calibrate the physical position 602b (e.g., physical translation and/or physical rotation) of sensor 222. For instance, the processor may use the transformation function 602a to generate signals for controlling a mechanical translating or rotating mechanism (e.g., an actuator) coupled to the sensor. The transformation function can be provided to a controller that adjusts the actuator, thereby adjusting the sensor FOV to be within a tolerance amount of the calibration angle.

In some embodiments, the processor can determine a transformation function between a calibration measurement and an operational measurement of a measurement sensor (e.g., an accelerometer, gyroscope, etc.). For example, a transformation function can be used calibrate the acceleration sensor and determine (e.g., estimate) an orientation of a portion of the vehicle (e.g., the portion that includes the sensor). In embodiments where two or more accelerometers may be coupled to another sensor (e.g., a camera or depth sensor), the measurements from the two or more accelerometers may be used to determine relative position changes. In some embodiments, a transformation function may be used to calibrate a parameter of a measurement sensor. For example, a parameter can include a phase, amplitude, distortion, etc. of an electromagnetic signal transmitted from a sensor.

In another embodiment, the processor may apply a transformation function 604a to calibrate sensor output 604b (e.g., a camera image, a depth image, acceleration measurement, etc.). For instance, the processor may use the transformation function 604a to generate a corrected camera image, depth image, etc. In another embodiment, the processor may apply a transformation function 606a to calibrate features extracted from a sensor image 606b (e.g., a camera image, a depth image, etc.). For instance, the processor may use the transformation function 606a to generate one or more corrected features (e.g., including corrected rotation and/or corrected translation) relative to the calibration sensor data. In some embodiments, the processor may determine a corrected data set including a corrected translation and a corrected rotation based on the transformation function. The transformation function, once applied to another or future image taken by a vehicle sensor, can result in the adjustment of the angle within the other image to be within a tolerance amount (e.g., less than 5%, less than 3%, less than 1%, etc.) of the calibration angle.

In another embodiment, the processor may apply a transformation function 608a to calibrate navigation control signals 608b (e.g., for navigating the vehicle 102 based on the sensor outputs). For instance, the processor may use the transformation function 608a to generate one or more corrected navigation control signals and transmit the corrected signals to the controller 220 of the vehicle.

In some embodiments, the sensor 222 may be coupled to a sensor controller and/or sensor processor configured to execute one or more of the steps described above (e.g., apply the transformation function to the sensor data). In some embodiments, the sensor controller and/or sensor processor may receive the transformation function from a computing system 206 or computing system 202. For example, the calibration of the sensor can be executed in coordination between the sensor processor and the computing system 206 or computing system 202.

In some embodiments, a computing system may monitor the subsequent performance of the vehicle sensor(s) to ensure that the calibration was successful. If not, the computing system may signal to the vehicle 102 to return for further calibration (e.g., at a different calibration location and/or with different calibration images).

Among the benefits of the above example methods is that the vehicle's controller 206 can rely on a calibrated sensor or calibrated images in the use of safe and/or efficient navigation of the autonomous vehicle 102.

### Computer-based Implementations

In some examples, some or all of the processing described above can be carried out on a personal computing device, on one or more centralized computing devices, or via cloud-based processing by one or more servers. In some examples, some types of processing occur on one device and other types of processing occur on another device. In some examples, some or all of the data described above can be stored on a personal computing device, in data storage hosted on one or more centralized computing devices, or via cloud-based storage. In some examples, some data is stored in one location and other data is stored in another location. In some examples, quantum computing can be used. In some examples, functional programming languages can be used. In some examples, electrical memory, such as flash-based memory, can be used.

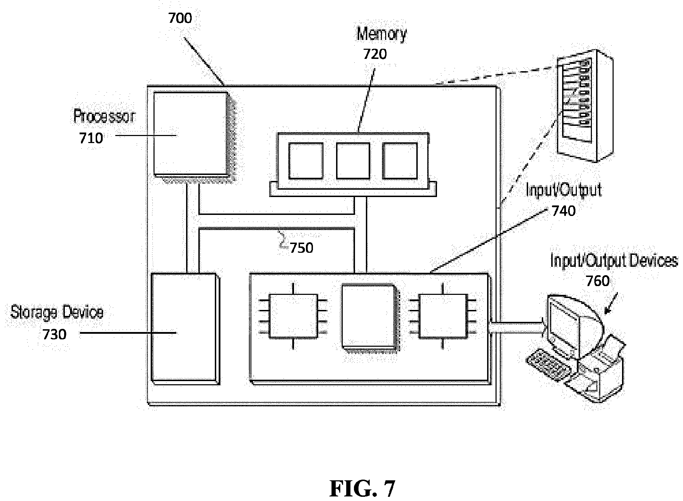

Fig. 7 is a block diagram of an example computer system 700 that may be used in implementing the systems and methods described herein. General-purpose computers, network appliances, mobile devices, or other electronic systems may also include at least portions of the system 700. The system 700 includes a processor 710, a memory 720, a storage device 730, and an input/output device 740. Each of the components 710, 720, 730, and 740 may be interconnected, for example, using a system bus 750. The processor 710 is capable of processing instructions for execution within the system 700. In some implementations, the processor 710 is a single-threaded processor. In some implementations, the processor 710 is a multi-threaded processor. The processor 710 is capable of processing instructions stored in the memory 720 or on the storage device 730.

The memory 720 stores information within the system 700. In some implementations, the memory 720 is a non-transitory computer-readable medium. In some implementations, the memory 720 is a volatile memory unit. In some implementations, the memory 720 is a non-volatile memory unit.

The storage device 730 is capable of providing mass storage for the system 700. In some implementations, the storage device 730 is a non-transitory computer-readable medium. In various different implementations, the storage device 730 may include, for example, a hard disk device, an optical disk device, a solid-date drive, a flash drive, or some other large capacity storage device. For example, the storage device may store long-term data (e.g., database data, file system data, etc.). The input/output device 740 provides input/output operations for the system 700. In some implementations, the input/output device 740 may include one or more of a network interface devices, e.g., an Ethernet card, a serial communication device, e.g., an RS-232 port, and/or a wireless interface device, e.g., an 802.11 card, a 3G wireless modem, or a 4G wireless modem. In some implementations, the input/output device may include driver devices configured to receive input data and send output data to other input/output devices, e.g., keyboard, printer and display devices 760. In some examples, mobile computing devices, mobile communication devices, and other devices may be used.

In some implementations, at least a portion of the approaches described above may be realized by instructions that upon execution cause one or more processing devices to carry out the processes and functions described above. Such instructions may include, for example, interpreted instructions such as script instructions, or executable code, or other instructions stored in a non-transitory computer readable medium. The storage device 730 may be implemented in a distributed way over a network, such as a server farm or a set of widely distributed servers, or may be implemented in a single computing device.

Although an example processing system has been described in Fig. 7, embodiments of the subject matter, functional operations and processes described in this specification can be implemented in other types of digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible nonvolatile program carrier for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "system" may encompass all kinds of apparatus, devices, and machines for processing data, including by way of example a programmable processor, a computer, or multiple processors or computers. A processing system may include special purpose logic circuitry, e.g., an FPGA (field programmable gate array) or an ASIC (application specific integrated circuit). A processing system may include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a standalone program or as a module, component, subroutine, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Computers suitable for the execution of a computer program can include, by way of example, general or special purpose microprocessors or both, or any other kind of central processing unit. Generally, a central processing unit will receive instructions and data from a read-only memory or a random access memory or both. A computer generally includes a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Computer readable media suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magneto optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory . feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's user device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of what may be claimed, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous. Other steps or stages may be provided, or steps or stages may be eliminated, from the described processes. Accordingly, other implementations are within the scope of the following claims.

### Terminology

The phraseology and terminology used herein is for the purpose of description and should not be regarded as limiting.

The term "approximately", the phrase "approximately equal to", and other similar phrases, as used in the specification and the claims (e.g., "X has a value of approximately Y" or "X is approximately equal to Y"), should be understood to mean that one value (X) is within a predetermined range of another value (Y). The predetermined range may be plus or minus 20%, 10%, 5%, 3%, 1%, 0.1%, or less than 0.1%, unless otherwise indicated.

The indefinite articles "a" and "an," as used in the specification and in the claims, unless clearly indicated to the contrary, should be understood to mean "at least one." The phrase "and/or," as used in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

The use of "including," "comprising," "having," "containing," "involving," and variations thereof, is meant to encompass the items listed thereafter and additional items.

Use of ordinal terms such as "first," "second," "third," etc., in the claims to modify a claim element does not by itself connote any priority, precedence, or order of one claim element over another or the temporal order in which acts of a method are performed. Ordinal terms are used merely as labels to distinguish one claim element having a certain name from another element having a same name (but for use of the ordinal term), to distinguish the claim elements.

The present teaching may also extend to the features of one or more of the following numbered clauses:

### CLAUSES

1. A computing system for autonomous vehicle operation, the computing system comprising:
   a processor configured to determine a transformation function based on a current position of at least one sensor of a first autonomous vehicle relative to a body of the first autonomous vehicle such that, when the transformation function is applied to images captured by the sensor, the images are adjusted to correspond to an intended position of the sensor relative to the body of the first autonomous vehicle.
2. The system of clause 1, wherein the current position of the sensor comprises an angle of the sensor relative to the body of the first autonomous vehicle.
3. The system of clause 1, further comprising:
   a communication device communicably coupled to the processor, the communication device configured to:
   transmit, to a controller of the first autonomous vehicle, a navigation signal for navigating the first autonomous vehicle to a calibration location; and
   receive, from the sensor of the first autonomous vehicle, at least one calibration image of the calibration location, the calibration image indicating a calibration position of the sensor of the first autonomous vehicle.
4. The system of clause 3, wherein the communication device is further configured to:
   transmit, to a controller of a second autonomous vehicle, a navigation signal for navigating the second autonomous vehicle to the calibration location; and
   receive, from at least one sensor of the second autonomous vehicle, an image of the calibration location, and
   wherein the processor is further configured to evaluate the image to determine the current position of the sensor of the second autonomous vehicle relative to the body of the second autonomous vehicle.
5. The system of clause 4, wherein, in evaluating the image, the processor is configured to compare the calibration image to the image received from the sensor of the second autonomous vehicle.
6. The system of clause 4, wherein the first autonomous vehicle is the same as the second autonomous vehicle.
7. The system of clause 3, wherein the calibration location is a surface over which the first autonomous vehicle navigates.
8. The system of clause 1, wherein the sensor is a camera, a depth sensor, or a LiDAR sensor.
9. The system of clause 1, wherein the processor is further configured to apply the transformation function to the images captured by the sensor.
10. A computer-implemented method for automatic sensor position calibration in autonomous vehicles, the method comprising:
   determining, by a processor, a transformation function based on a current position of at least one sensor of a first autonomous vehicle relative to a body of the first autonomous vehicle such that, when the transformation function is applied to images captured by the sensor, the images are adjusted to correspond to an intended position of the sensor relative to the body of the first autonomous vehicle.
11. The method of clause 10, wherein the current position of the sensor comprises an angle of the sensor relative to the body of the first autonomous vehicle.
12. The method of clause 10, further comprising:
   transmitting, to a controller of the first autonomous vehicle by a communication device communicably coupled to the processor, a navigation signal for navigating the first autonomous vehicle to a calibration location; and
   receiving, by the communication device from the sensor of the first autonomous vehicle, at least one calibration image of a calibration location, the calibration image indicating a calibration position of the sensor of the first autonomous vehicle.
13. The method of clause 12, further comprising:
   detecting, by the processor and based on the calibration image, at least one surface of the calibration location; and
   determining, by the processor and based on the detected surface, a calibration angle of the sensor of the first autonomous vehicle relative to at least one axis of the detected surface.
14. The method of clause 12, further comprising:
   storing, by a memory, the calibration image, wherein the memory is at least one of:
   (i) a memory of the first autonomous vehicle; or
   (ii) a memory of a remote computing system communicably coupled to the first autonomous vehicle.
15. The method of clause 12, further comprising:
   transmitting, by the communication device to a controller of a second autonomous vehicle, a navigation signal for navigating the second autonomous vehicle to the calibration location;
   receiving, by the communication device from at least one sensor of the second autonomous vehicle, an image of the calibration location; and
   evaluating, by the processor, the image to determine the current position of the sensor of the second autonomous vehicle relative to the body of the second autonomous vehicle.
16. The method of clause 15, further comprising, prior to transmitting the navigation signal for navigating the second autonomous vehicle:
   receiving, by the communication device, a signal indicative of at least one navigation event relating to the second autonomous vehicle; and
   determining, by the processor, whether the navigation event is within a set of defined events associated with traversal of a path by the second autonomous vehicle.
17. The method of clause 16, wherein the at least one navigation event comprises at least one of:
   (a) a speed of the second autonomous vehicle;
   (b) an efficiency in collecting or shelving items by the second autonomous vehicle; or
   (c) a collision between the second autonomous vehicle and an object.
18. The method of clause 15, wherein the evaluating comprises:
   comparing, by the processor, the calibration image to the image received from the sensor of the second autonomous vehicle.
19. The method of clause 15, wherein the first autonomous vehicle is the same as the second autonomous vehicle.
20. The method of clause 12, wherein the calibration location is a surface over which the first autonomous vehicle navigates.
21. The method of clause 10, wherein the sensor is a camera, a depth sensor, or a LiDAR sensor.
22. The method of clause 10, further comprising:
   applying, by the processor, the transformation function to the images captured by the sensor.
23. The method of clause 22, wherein applying the transformation function to the images captured by the sensor occurs in real-time or near real-time with navigation of the first autonomous vehicle.
24. The method of clause 23, further comprising:
   receiving, by a communication device communicably coupled to the processor, a signal indicative of at least one of:
   (a) a speed of the first autonomous vehicle being within a desired speed range;
   (b) an efficiency in collecting or shelving items by the first autonomous vehicle being within a desired efficiency range; or
   (c) a lack of a collision between the first autonomous vehicle and an object.
25. A non-transitory computer-readable medium having instructions stored thereon that, when executed by one or more computer processors, cause the computer processors to perform operations comprising:
   determining a transformation function based on a current position of at least one sensor of an autonomous vehicle relative to a body of the autonomous vehicle such that, when the transformation function is applied to images captured by the sensor, the images are adjusted to correspond to an intended position of the sensor relative to the body of the autonomous vehicle.

## Claims

1. A computer-implemented method for automatic sensor position calibration in autonomous vehicles, the method comprising:
determining, by a processor, a transformation function based on a current position of at least one sensor of a first autonomous vehicle relative to a body of the first autonomous vehicle such that, when the transformation function is applied to images captured by the sensor, the images are adjusted to correspond to an intended position of the sensor relative to the body of the first autonomous vehicle.

2. The method of claim 1, wherein the current position of the sensor comprises an angle of the sensor relative to the body of the first autonomous vehicle.

3. The method of claim 1 or 2, further comprising:
transmitting, to a controller of the first autonomous vehicle by a communication device communicably coupled to the processor, a navigation signal for navigating the first autonomous vehicle to a calibration location; and
receiving, by the communication device from the sensor of the first autonomous vehicle, at least one calibration image of a calibration location, the calibration image indicating a calibration position of the sensor of the first autonomous vehicle.

4. The method of claim 3, further comprising:
detecting, by the processor and based on the calibration image, at least one surface of the calibration location; and
determining, by the processor and based on the detected surface, a calibration angle of the sensor of the first autonomous vehicle relative to at least one axis of the detected surface.

5. The method of claim 3 or 4, further comprising:
storing, by a memory, the calibration image, wherein the memory is at least one of:
(i) a memory of the first autonomous vehicle; or
(ii) a memory of a remote computing system communicably coupled to the first autonomous vehicle.

6. The method of any of claims 3 to 5, further comprising:
transmitting, by the communication device to a controller of a second autonomous vehicle, a navigation signal for navigating the second autonomous vehicle to the calibration location;
receiving, by the communication device from at least one sensor of the second autonomous vehicle, an image of the calibration location; and
evaluating, by the processor, the image to determine the current position of the sensor of the second autonomous vehicle relative to the body of the second autonomous vehicle.

7. The method of claim 6, further comprising, prior to transmitting the navigation signal for navigating the second autonomous vehicle:
receiving, by the communication device, a signal indicative of at least one navigation event relating to the second autonomous vehicle; and
determining, by the processor, whether the navigation event is within a set of defined events associated with traversal of a path by the second autonomous vehicle.

8. The method of claim 7, wherein the at least one navigation event comprises at least one of:
(a) a speed of the second autonomous vehicle;
(b) an efficiency in collecting or shelving items by the second autonomous vehicle; or
(c) a collision between the second autonomous vehicle and an object.

9. The method of any of claims 6 to 8, wherein the evaluating comprises:
comparing, by the processor, the calibration image to the image received from the sensor of the second autonomous vehicle.

10. The method of claim 6any of claims 6 to 9, wherein the first autonomous vehicle is the same as the second autonomous vehicle.

11. The method of any of claims 3 to 10, wherein the calibration location is a surface over which the first autonomous vehicle navigates.

12. The method of any of the preceding claims, wherein the sensor is a camera, a depth sensor, or a LiDAR sensor.

13. The method of any of the preceding claims, further comprising:
applying, by the processor, the transformation function to the images captured by the sensor, wherein applying the transformation function to the images captured by the sensor preferably occurs in real-time or near real-time with navigation of the first autonomous vehicle; and optionally the method further comprising:
receiving, by a communication device communicably coupled to the processor, a signal indicative of at least one of:
(a) a speed of the first autonomous vehicle being within a desired speed range;
(b) an efficiency in collecting or shelving items by the first autonomous vehicle being within a desired efficiency range; or
(c) a lack of a collision between the first autonomous vehicle and an object.

14. A computing system for autonomous vehicle operation, the autonomous vehicle comprising:
at least one sensor configured to provide an output useable in operation of the vehicle; and
a processor, wherein the computing system is configured to carry out the method of any of the preceding claims.

15. A computer program comprising instructions, which when executed on a processor of a computing system, is configured to cause the computing system to carry out the method of any of claims 1 to 13.
